# EUROPEAN PATENT SPECIFICATION

(11) **EP 3 769 897 B1**
(45) Date of publication and mention of the grant of the patent: **27.07.2022**
(21) Application number: 19770370.5
(22) Date of filing: 18.03.2019
(51) Int. Cl.: B23K 26/00, B23K 26/03, B23K 26/14, B23K 26/38

(54) **LASER PROCESSING MACHINE AND LASER PROCESSING METHOD**
LASERBEARBEITUNGSMASCHINE UND LASERBEARBEITUNGSVERFAHREN
MACHINE DE TRAITEMENT PAR LASER ET PROCÉDÉ DE TRAITEMENT PAR LASER

(30) Priority: 23.03.2018 JP 2018055668
(43) Date of publication of application: 27.01.2021
(73) Proprietor: AMADA CO., LTD., Isehara-shi Kanagawa 259-1196 (JP)
(72) Inventor: IWASAKI, Jun, Isehara-shi, Kanagawa 259-1196 (JP); MIYOSHI, Hironobu, Isehara-shi, Kanagawa 259-1196 (JP)
(74) Representative: Grünecker Patent- und Rechtsanwälte PartG mbB
(86) International application number: PCT/JP2019/011029
(87) International publication number: WO 2019/181816

(56) References cited:
- EP-A1- 3 088 123
- EP-A1- 3 095 549
- WO-A1-2012/029010
- WO-A1-2017/194460
- JP-A- H0 810 976
- JP-A- 2002 210 575
- JP-A- 2003 053 568
- JP-A- 2006 521 933
- JP-A- 2016 155 140
- JP-A- 2017 024 046

## Description

### TECHNICAL FIELD

The present invention relates to a laser processing machine and to a laser processing method.

### BACKGROUND ART

A laser processing machine generally includes a laser processing head that irradiates a laser light toward a plate-shaped workpiece (a sheet metal). The laser processing head includes a condenser lens that condenses a laser light on the workpiece within it. A bend mirror that reflects the laser light toward the condenser lens is sometimes provided on an incident side of the condenser lens.

Heretofore, a laser processing machine includes a monitoring unit for monitoring a laser processing state by utilizing a returned light traveling from a processed point toward a bend mirror while the laser light is irradiated (see Patent Document 1 listed below). Here, the returned light from the processed point toward the bend mirror is reflected by the bend mirror or passes through the bend mirror. The light passing through the bend mirror contains scattering rays such as rays generated on a side of the processing point, including the processing point and the vicinity of the processing point (e.g. visible rays by thermal radiations). The monitoring unit utilizes the light passing through the bend mirror.

Configuration of the monitoring unit will be briefly explained. As a detector that detects intensity of the returned light, a photodiode circuit is provided in the vicinity of a reflection surface of the bend mirror within the laser processing head. In addition, as a detector that detects intensity of the returned light passing through the bend mirror, a photodiode circuit is provided on a pass-through side of the bend mirror (a reverse side of the reflection surface) within the laser processing head. The photodiode circuit(s) receives a light and outputs a voltage corresponding to intensity of the light.

In addition to the photodiode circuits, the monitoring unit includes a monitoring section that monitors the laser processing state based on output voltages of the photodiode circuits. For example, the monitoring section judges whether or not a multiplication value got by multiplying the output voltage of the photodiode by a preset gain exceeds a cutting success/failure judgement threshold value (threshold voltage). The preset gain is a multiplying factor got by dividing a reference voltage (e.g. 1V) by an output voltage of the photodiode circuit that enables proper cutting. The preset gain will be set through an gain adjustment according to a processing condition including material of a workpiece, thickness of a workpiece, a kind of assist gas and so on. The cutting success/failure determination threshold value (threshold voltage) is a threshold value (threshold voltage) for judging whether the cutting process succeeds or fails, and is one of threshold values (threshold voltages) for judging the laser processing state.

Note that Patent Documents 2 to 4 listed below are also exemplarily shown as relative arts.

### Prior Art Document

### Patent Document

Patent Document 1: Japanese Patent Application Publication No. 2011-79037
Patent Document 2: Japanese Patent Application Publication No. 2012-24778
Patent Document 3: Japanese Patent Application Publication No. 2015-148483
Patent Document 4: Japanese Patent Application Publication No. 2013-86115

### SUMMARY OF INVENTION

In a prior-art monitoring unit, a monitoring section monitors a laser processing state by using intensity of a returned light (an output voltage) that is part in a visible wavelength band or a near-infrared wavelength band that is detectable by a photodiode circuit that serves as a detector. In a case where the wavelengths that enable a photodiode to generate photocurrent are wavelengths of visible rays and some of near-infrared rays, the photodiode circuit generates photocurrent from a light generated in laser processing and converts it to voltage, and then outputs the voltage as the light intensity. In addition, when cutting is done under various conditions, the intensity of the returned light including wide wavelength bands that is regarded as proper is also wide.

Therefore, under a condition with excessively low intensity of light, there may be a case where the preset gain cannot be set properly when the output voltage of the photodiode circuit cannot be made raised to the reference voltage even by setting the gain thereof to its maximum at its gain adjustment. In addition, under a condition with excessively high intensity of light, there may be a case where the preset gain cannot be set properly when the output voltage of the photodiode circuit far exceed the reference voltage even by setting the gain thereof to its minimum. As the results, the monitoring section of the prior-art monitoring unit cannot monitor the actual laser processing state precisely under both opposite extreme processing conditions. That is, it is hard to carry out laser processing stably under various processing conditions.

The document JP 2016 155140 A discloses a laser processing machine according to the preamble of claim 1.

An object of the present invention is to provide a lase processing machine and a laser processing method that can monitor an actual laser processing state precisely under various processing conditions.

A first aspect of the present invention provides a laser processing machine comprising: a laser oscillator that outputs a laser light having a 1µm wavelength band; a laser processing head that is optically connected with the laser oscillator and irradiates the laser light toward a workpiece while injecting assist gas; a detector that is provided within the laser processing head and detects a returned light travelling from a side of a processed point, including the processed point and a vicinity of the processed point, toward the laser processing head while the laser light is irradiated; and a monitoring section that monitors a laser processing state by selectively detecting a light level of a specific wavelength band according to a processing condition in temporal sequence from the returned light detected by the detector.

A second aspect of the present invention provides a laser processing method for carrying out laser processing on a workpiece, the method comprising: irradiating a laser light from a laser processing head that is optically connected with a laser oscillator that outputs the laser light having a 1µm wavelength band toward the workpiece while injecting assist gas; detecting a returned light travelling from a side of a processed point, including the processed point and a vicinity of the processed point, toward the laser processing head while the laser light is irradiated; and monitoring a laser processing state by selectively detecting a light level of a specific wavelength band according to a processing condition in temporal sequence from the detected returned light.

### BRIEF DESCRIPTION OF DRAWINGS

**[****Fig. 1]** Fig. 1 is a schematic perspective view of a laser processing machine according to an embodiment.
**[****Fig.** 2] Fig. 2 is a schematic cross-sectional view of a processing head of the laser processing machine.
**[****Fig. 3]** Fig. 3 is a graph showing characteristics between a transmittance of a bend mirror and a wavelength (transmission characteristics).
**[****Fig.** 4] Fig. 4 is a block diagram of the laser processing machine.
**[****Fig. 5]** Fig. 5 is a graph showing relationship between a ratio of a light level of a 470nm wavelength band with respect to a light level of an 800nm wavelength band and an elapsed time while cutting a workpiece made of iron-based metal.
**[****Fig.** 6] Fig. 6 is a graph showing relationship between a ratio of a light level of a 470nm wavelength band with respect to a light level of an 800nm wavelength band and an elapsed time while cutting a workpiece made of aluminum alloy.
[Fig. 7] Fig. 7 is a schematic cross-sectional view of a processing head of a laser processing machine according to another embodiment.
[Fig. 8] Fig. 8 is a block diagram of the laser processing machine.
[Fig. 9] Fig. 9(a) is a graph showing a test result of a first processing success/failure judgement when piercing and cutting are done properly under a first processing condition, and Fig. 9(b) is a graph showing a test result of the first processing success/failure judgement when gouging and burning occur mixedly due to a cutting failure under the first processing condition.
[Fig. 10] Fig. 10(a) is a graph showing a test result of the first processing success/failure judgement when piercing is done properly under a second processing condition, and Fig. 10(b) is a graph showing a test result of the first processing success/failure judgement when cutting is done properly under the second processing condition.
[Fig. 11] Fig. 11 is a graph showing a test result of the first processing success/failure judgement when gouging occurs due to a cutting failure under the processing condition 2.
[Fig. 12] Fig. 12 is a graph showing a test result of the first processing success/failure judgement when burning occurs due to a cutting failure under the second processing condition.
**[****Fig. 13]** Fig. 13 is a flowchart of a laser processing method according to an embodiment.

### DESCRIPTION OF EMBODIMENTS

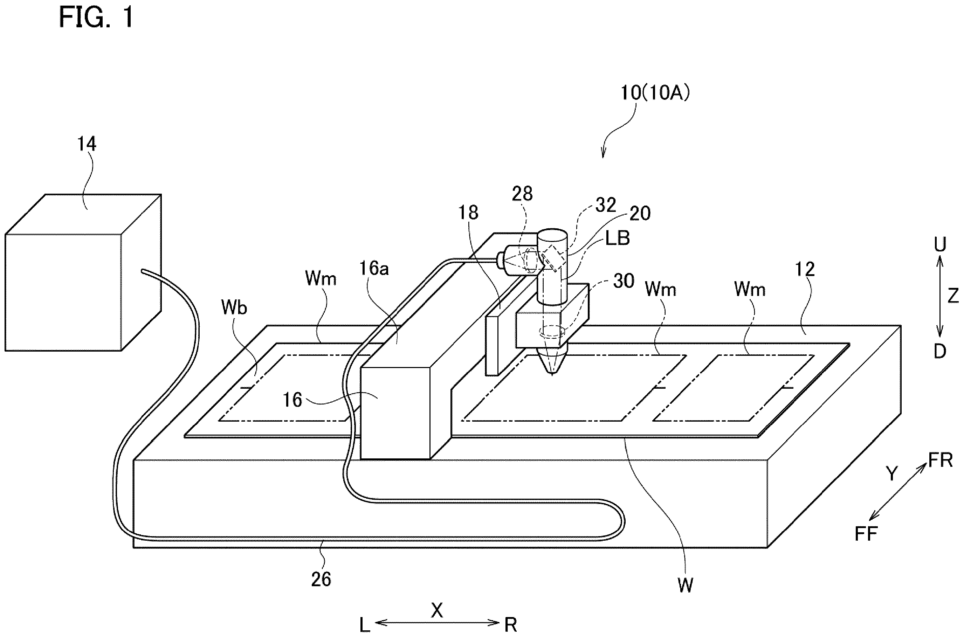

Hereinafter, an embodiment and another embodiment will be explained with reference to Fig. 1 to Fig. 8. An "X axis direction" is a left-right direction that is one of horizontal directions, a "Y axis direction" is a front-back direction that is a horizontal direction perpendicular to the left-right direction, and a "Z axis direction" is a vertical direction. In Fig. 1, "FF" indicates a forward direction, "FR" indicates a rearward direction, "L" indicates a leftward direction, "R" indicates a rightward direction, "U" indicates an upward direction, and "D" indicates a downward direction.

As shown in Fig. 1, a laser processing machine 10 according to the embodiment is a work machine that carries out laser-processing (including piercing and cutting) of a plate-shaped workpiece (a sheet metal) W by irradiating a laser light (laser beam) LB having a 1µm wavelength band. Specific configuration of the laser processing machine 10 will be explained hereinafter.

The laser processing machine 10 includes a work table 12 that supports the workpiece W. The work table 12 extends in the X axis direction. The work table 12 has plural workpiece support plates (skid plates: not shown in the drawings) extending in the Y axis direction, and plural pin-holders for supporting the workpiece by point contacts are formed at intervals along an upper portion of each workpiece support plate. Plural clampers (not shown in the drawings) for clamping the workpiece W are provided at arbitrary positions of the work table 12. The pin-holder referred to here is a point support tool composed of a peak-shaped support portion and a body portion that restricts inclination of the peak-shaped support portion.

A fiber laser oscillator 14 is disposed near the work table 12 as a laser oscillator that outputs (oscillates) a laser light LB having a 1µm wavelength band. The fiber laser oscillator 14 is a laser oscillator composed of known configuration as shown in the above-mentioned Patent Document 2. In a case of Yb fiber laser, a laser light having an almost 1060nm-1100nm wavelength band is output. A disk laser oscillator, a direct diode laser oscillator (DDL oscillator) or the like may be used instead of the fiber laser oscillator 14 as a laser oscillator that outputs a laser light LB having a 1µm wavelength band. The DDL oscillator is capable of outputting a laser light having a 900nm-990nm wavelength. That is, the laser light LB having a 1µm wavelength band is a laser light LB with a range of wavelength 900nm-1100nm.

A gate-shaped movable frame 16 is provided on the work table 12 so as to be movable in the X axis direction. The movable frame 16 extends in the Y axis direction (front-back direction) so as to be bridged over the work table 12. The movable frame 16 moves in the X axis direction by being driven by an X axis motor (not shown in the drawings) provided at an appropriate position of the work table 12. In addition, a carriage 18 is provided at a horizontal portion 16a of the movable frame 16 so as to be movable in the Y axis direction. The carriage 18 moves in the Y axis direction by being driven by a Y axis motor (not shown in the drawings) provided at an appropriate position of the movable frame 16.

A cylindrical laser processing head 20 is provided on the carriage 18 so as to be movable in the Z axis direction. The carriage 18 includes a Z axis motor for moving the laser processing head 20 in the Z axis direction. The laser processing head 20 irradiates the laser light LB while injecting the assist gas from above toward the workpiece W. The laser processing head 20 is provided above the work table 12, with the carriage 18 and the movable frame 16 interposed therebetween, movably in the X-Z directions by being driven by the X-Z axis motors.

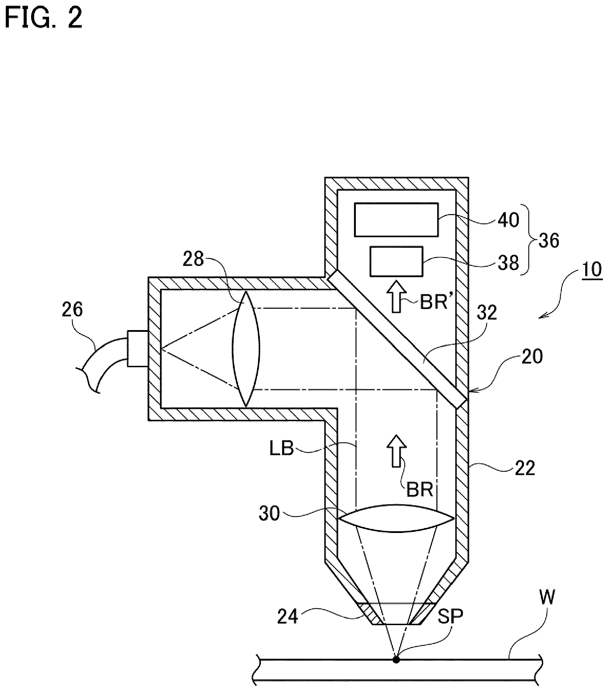

As shown in Fig. 1 and Fig. 2, the laser processing head 20 includes a detachable nozzle 24 at an end (a lower end) of a processing head body 22. In addition, an emitting end of a process fiber 26 for transmitting the laser light LB is connected with a base end of the processing head body 22. An incident end of the process fiber 26 is connected with an emitting end of the fiber laser oscillator 14. In other words, the laser processing head 20 is optically connected with the fiber laser oscillator 14 via the process fiber 26. Further, a portion near the nozzle 24 within the processing head body 22 is connected with an assist gas supply source (not shown in the drawings) via a pipe(s) (not shown in the drawings).

A collimate lens 28 that collimates the laser light LB emitted from the emitting end of the process fiber 26 is provided near a based end of the processing head body 22 within it. In addition, a condenser lens 30 that condenses the laser beam LB toward the workpiece W is provided on a pass-through side of the collimate lens 28 within the processing head body 22. Further, a bend mirror 32 that reflects the laser light LB toward the condenser lens 30 is provided between the collimate lens 28 and the condenser lens 30 (on an incident side of the condenser lens 30) within the processing head body 22.

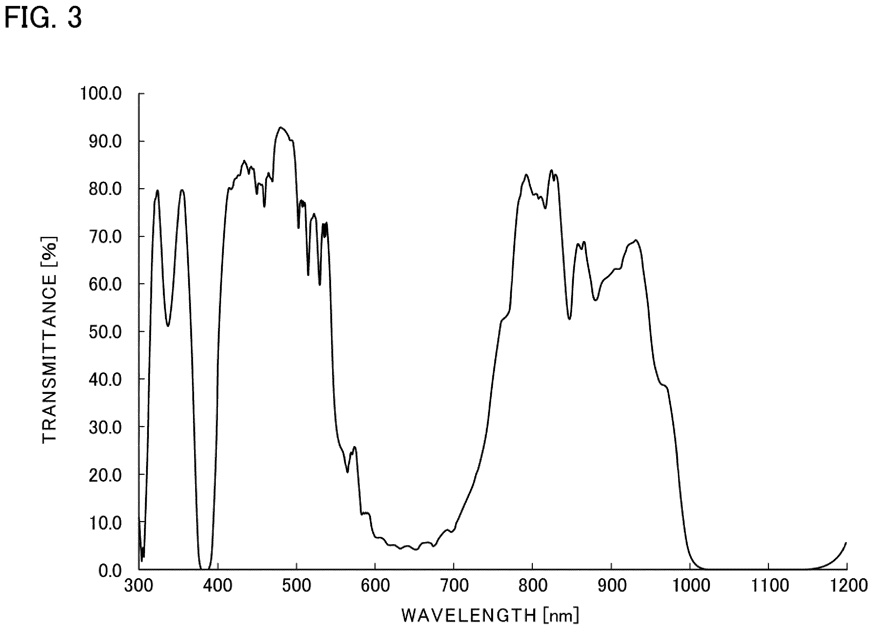

Transmittance-wavelength characteristics of the bend mirror 32 is shown in Fig. 3. That is, the bend mirror 32 reflects almost a whole of the laser light LB having 1µm wavelength band used for laser processing, and also reflects almost a whole of a visible light (e.g. red 630nm wavelength band) used as a guide light of the laser processing machine 10. Note that the bend mirror 32 can be designed with its transmittance-wavelength characteristics adjusted according to an arbitrary wavelength band of the laser light LB used for laser processing.

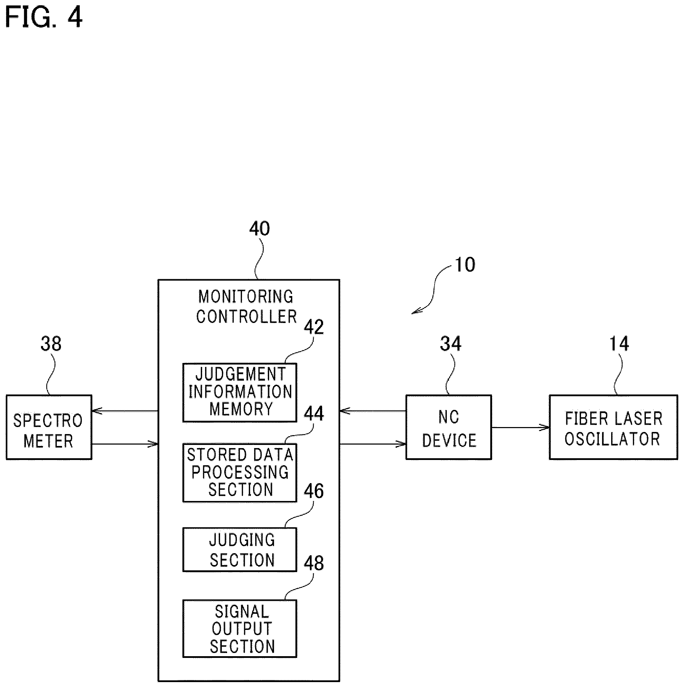

As shown in Fig. 4, the laser processing machine 10 has an NC (numerical control) device 34 that controls the fiber laser oscillator 14, the X-Z axis motors, the assist gas supply source and so on based on a processing program(s). The NC device 34 is composed of a computer, and has a memory for storing the processing program(s) and so on and a CPU (Central Processing Unit) for interpreting and executing the processing program(s).

According to the above explained configuration, the NC device 34 moves the laser processing head 20 in the Z axis direction by controlling the Z axis motor, and adjusts a focal point of the laser light LB with respect to the workpiece W by controlling a lens motor (not shown in the drawings) to move the condenser lens 30 in the Z axis direction. Next, the NC device 34 sets an irradiation position of the laser processing head 20 to a predetermined position on a marginal portion Wb of the workpiece W by controlling one or both of the X axis motor and the Y axis motor. Further, the NC device 34 irradiates the laser light LB while injecting the assist gas from the nozzle 24 (a distal end of the laser processing head 20) toward the workpiece W by controlling the fiber laser oscillator 14 and the assist gas supply source. According to this, the laser processing machine 10 forms a pierced hole (not shown in the drawings) at the predetermined position on the marginal portion Wb of the workpiece W (piercing process).

After forming the pierced hole, the NC device 34 moves the irradiation position of the laser processing head 20 from the pierced hole to an outline of a product portion Wm of the workpiece W by controlling the X axis motor or the Y axis motor while irradiating the laser light LB and injecting the assist gas from the nozzle 24 toward the workpiece W. According to this, the laser processing machine 10 forms a slit from the pierced hole on the marginal portion Wb to a portion of the product portion Wm (an approaching process in the cutting process).

After the approaching process, the NC device 34 moves the laser processing head 20 along the outline of the product portion Wm while injecting the assist gas and irradiating the laser light LB. According to this, the laser processing machine 10 cuts out a product from the workpiece W (a product cutting process in the cutting process).

As shown in Fig. 2, the laser processing machine 10 includes a monitoring unit 36. The monitoring unit 36 monitors the laser processing state by detecting a returned light BR' passing through the bend mirror 32 in a returned light BR from a side of the processed point SP, including the processed point SP and the vicinity of the processed point SP, toward the bend mirror 32 during the laser irradiation. Note that a cutting front (a sloped portion receiving the laser light LB on a processing forward side in a cut slit) and the vicinity thereof are also included in the side of the processed point SP. That is, the light detected as the returned light BR contains scattering rays. The scattering rays contain rays by thermal radiations generated from the material of the workpiece heated by the laser light LB, and rays of plasma in which molecules of gas near the cutting front (assist gas and sublimes metal gas) are ionized to cations and electrons by the laser light LB. In addition, the laser light LB reflected by the cutting front and a Raman light of the laser light LB are also contained in the returned light BR.

Specific configuration of the monitoring unit 36 according to the present embodiment will be explained. A detected returned light is the returned light BR' passing through the bend mirror 32 to a pass-through side (a reverse side of the reflection surface) in the returned light BR on a reflection side of the bend mirror 32 within the processing head body 22. A spectrometer 38 that disperses the returned light BR' by a diffraction grating or the like and detects light intensity of each wavelength band is provided on the pass-through side of the bend mirror 32 within the processing head body 22. The spectrometer 38 is a spectrometer having known configuration as shown in the above-mentioned Patent Document 3. The spectrometer 38 extracts (selects) lights having plural specific wavelength bands according to a processing condition from the returned light BR' passing through the bend mirror 32. In addition, the spectrometer 38 detects a level of light intensity of the selected lights having the specific wavelength bands as a light level (an A/D count value) in temporal sequence. Here, the spectrometer 38 corresponds to a detector that detects each light level of the plural specific wavelength bands according to the processing condition in temporal sequence in the returned light BR' passing through the bend mirror 32. Note that the spectrometer 38 can change a sampling period and a data smoothing process according to its internal settings, because it executes digital processing.

For example, with respect to a processing condition where material of the workpiece W is iron-based metal such as mild steel and stainless steel, the inventors select an 800nm wavelength band (800±20nm) and a 470nm wavelength band (470±20nm) as specific wavelength bands according to the processing condition. When cutting is done properly under the processing condition where the material of the workpiece W is iron-based metal, main composition of a visible light (red - near infrared) occurred due to thermal radiations on the side of the processed point SP of the workpiece W is a light having the 800nm wavelength band. Since the light level of the 800nm wavelength band transitions stably in temporal sequence when cutting is done properly, it is possible to monitor a proper processing sate in distinction from a failed processing state. Therefore, the 800nm wavelength band is selected (see Practical Example 1 explained later).

In addition, when cutting is done properly under a processing condition where thickness of the workpiece W is not smaller than 3mm, for example, and the assist gas is nitrogen (low oxygen concentration or oxygen free), a pale blue visible light occurs on the side of the processing point SP of the workpiece W. Main composition of the visible light is the light having the 470nm wavelength band. Since the light level of the 470nm wavelength band also transitions stably in temporal sequence when cutting is done properly, it is possible to monitor a proper processing sate in distinction from a failed processing state. Therefore, the 470nm wavelength band is also selected. Further, under a processing condition that material of the workpiece W is iron-based metal and assist gas is oxygen, the light level of the 470nm wavelength band becomes high when a failure occurs due to mixture of nitrogen into oxygen, and thereby is possible to monitor a proper processing sate in distinction from a failed processing state (see Practical Example 2 explained later).

As explained above, both of the light level of the 800nm wavelength band and the light level of the 470nm wavelength band transition stably in temporal sequence when material of the workpiece W is iron-based metal and cutting is done properly, but the light level of the 470nm wavelength band is higher than the light level of the 800nm wavelength band. Therefore, a proper processing sate can be monitored more precisely in distinction from a failed processing state by comparing the light level of the 800nm wavelength band and the light level of the 470nm wavelength band.

Note that, as the specific wavelength band(s) according to the processing condition, any one of the 470nm wavelength band and the 800nm wavelength band may be selected, or both of them may be selected. The specific wavelength band(s) according to the processing condition can be selected arbitrarily, and a 510nm wavelength band or other wavelength band(s) can be selected than the 800nm wavelength band and the 470nm wavelength band may be selected.

As shown in Fig. 2 and Fig. 4, a monitoring controller 40 is provided on an output side of the spectrometer 38 within the processing head body 22 as a monitoring section that monitors the laser processing state and an occurrence of an assist gas failure (purity failure) based on temporally sequential detection results from the spectrometer 38. Note that the monitoring controller 40 may be disposed within a casing of the NC device 34.

As shown in Fig. 1, Fig. 2 and Fig. 4, the monitoring controller 40 has a memory for storing the monitoring program(s) and so on, a CPU (Central Processing Unit) for interpreting and executing the monitoring program(s). In addition, the monitoring controller 40 possesses a function as a judgement information memory 42, a function as a stored data processing section 44, a function as a judging section 46 and a function as a signal output section 48.

The judgement information memory 42 stores a threshold value (threshold count value) for judging a laser processing state for each processing condition as judgement information. The threshold value for judging a laser processing state contains a workpiece existence threshold value for judging whether or not the workpiece W exists on the work table 12, and a piercing success/failure threshold value for judging whether a piercing process succeeds or fails. Further, the threshold value for judging a laser processing state contains a threshold value for a pierce hole penetration for judging whether or not a pierced hole is formed, and a threshold value for a cutting success/failure for judging whether a cutting process (including an approaching process) succeeds or fails. Furthermore, the threshold value for judging a laser processing state contains an assist gas failure detection threshold value for judging whether or not an assist gas failure occurs.

The judgement information memory 42 stores a reference transition pattern for each processing condition as the judgement information. The reference transition pattern indicates an assumed temporal transition of a light level of a specific wavelength band in a proper laser processing state. The reference transition pattern contains a piercing reference transition pattern assumed in a proper piercing process, and a cutting reference transition pattern assumed in a proper cutting process (including an approaching process).

The stored data processing section 44 calculates a moving average value of a light level of a specific wavelength band according to a processing condition as a detection result (a detected value) from the spectrometer 38, and then stores the calculated moving average value in temporal sequence. In addition, the stored data processing section 44 can also output data made by storing the moving average value of the light level of the specific wavelength band in temporal sequence according to the processing condition directly to the judging section 46 as the detection result. The stored data processing section 44 can also output a moving average value of data made by storing the light level in temporal sequence to the stored data processing section 44 as the detection result.

The judging section 46 compares the result of the light level of the specific wavelength band according to the processing condition output from the stored data processing section 44 and the workpiece existence threshold value stored in the judgement information memory 42, and thereby judges whether or not a workpiece W exists. When the result of the light level of the specific wavelength band according to the processing condition is not smaller than the workpiece existence threshold value, the judging section 46 judges that a workpiece W exists on the work table 12. On the other hand, when the result of the light level is smaller than the workpiece existence threshold value, the judging section 46 judges that no workpiece W exists on the work table 12. Then, in a case where the judging section 46 judges that no workpiece W exists on the work table 12, the signal output section 48 outputs an alarm signal to the NC device 34 when the state continues for a predetermined time (e.g. few hundreds seconds) or when the same judgement is made again after a predetermined time elapses.

In a case where judging section 46 judges that a workpiece W exists on the work table 12, the piercing process is done subsequently. The judging section 46 judges the piercing success/failure by comparing the result of the light level of the specific wavelength band according to the processing condition output from the stored data processing section 44 and the piercing success/failure threshold value stored in the judgement information memory 42. When the result of the light level of the specific wavelength band according to the processing condition is not smaller than the piercing success/failure threshold value, the judging section 46 judges that the piercing process is done properly, and then judges that the piercing process is completed properly when the result of the light level becomes smaller than the piercing success/failure threshold value. And, in a case where the judging section 46 judges that the piercing process is completed properly, the signal output section 48 stops the piercing process even when the piercing program is still executed, and then immediately outputs a trigger signal for transitioning to the cutting process (the approaching process) to the NC device 34.

The judging section 46 judges that the piercing process is not yet completed or that it fails, if the result of the light level becomes smaller than the piercing success/failure threshold value during the piercing process but keeps a value not smaller than the pierce hole penetration threshold value, or if the result of the light level keeps the value not smaller than the pierce hole penetration threshold value even at a time when the execution of the piercing program has completed. Then, in a case where the judging section 46 judges that the piercing process fails, the signal output section 48 outputs an alarm signal to the NC device 34 when the state continues for a predetermined time (e.g. few hundreds seconds) or when the same judgement is made again after a predetermined time elapses. Note that the signal output section 48 may output an alarm signal immediately to the NC device 34 when the judging section 46 judges that the piercing process fails.

The judging section 46 separately judges at the start of the piercing process whether or not an assist gas failure occurs by comparing the result of the light level of the specific wavelength band according to the predetermined processing condition output from the stored data processing section 44 and the assist gas failure detection threshold value stored in the judgement information memory 42. The specific wavelength band according to the predetermined processing condition is a 470nm wavelength band for a case where the material of the workpiece W is iron-based metal and the assist gas is oxygen, for example. When the result of the light level of the specific wavelength band according to the predetermined processing condition exceeds the assist gas failure detection threshold value, the judging section 46 judges that the assist gas failure due to mixture of different gas occurs. Then, in a case where the judging section 46 judges that the assist gas failure due to mixture of different gas occurs, the signal output section 48 immediately outputs an alarm signal to the NC device 34. Note that the signal output section 48 may output an alarm signal to the NC device 34 when the state continues for a predetermined time (e.g. few hundreds seconds) or when the same judgement is made again after a predetermined time elapses.

In a case where the signal output section 48 outputs the trigger signal for transitioning to the cutting process (the approaching process), the cutting process is immediately started. The judging section 46 judges the cutting success/failure by comparing the result of the light level of the specific wavelength band according to the processing condition output from the stored data processing section 44 and the cutting success/failure determination threshold value stored in the judgement information memory 42. When the result of the light level of the specific wavelength band according to the processing condition exceeds the cutting success/failure determination threshold value, the judging section 46 judges that cutting process fails. On the other hand, when the result of the light level is not more than the cutting success/failure determination threshold value, the judging section 46 judges that the cutting process is done properly. Then, when the judging section 46 judges that the cutting process fails, the signal output section 48 outputs an alarm signal to the NC device 34 when the state continues for a predetermined time (e.g. few hundreds seconds) or when the same judgement is made again after a predetermined time elapses.

Subsequently, the judging section 46 judges whether or not the laser processing state is proper by using transition data made by storing the result of the light level from the spectrometer 38 in temporal sequence (hereinafter, called light level temporal transition). This case will be explained as follows, but redundant explanations will be omitted.

The judging section 46 judges whether or not the laser processing state is proper by comparing the light level temporal transition and the reference transition pattern according to the processing condition stored in the judgement information memory 42. That is, the judging section 46 compares upper/lower limit values of light intensity in a proper processing state presented by the reference transition pattern and transition cycle of high/low of the light intensity with upper/lower limit values of light intensity in a current processing state presented by the light level temporal transition and transition cycle of high/low of the light intensity. The judging section 46 judges whether or not the laser processing state is proper based on how much these characteristics are divergent.

For example, in a case where a thickness of a workpiece W is not smaller than 10mm and it is judged that the workpiece W exists on the work table 12, the judging section 46 judges the piercing success/failure by comparing the reference transition pattern for the piercing process stored in the judgement information memory 42 and the light level temporal transition of the specific wavelength band according to the processing condition. Specifically, the judging section 46 judges that the piercing process completes properly when the light level temporal transition coincides with the reference transition pattern for the piercing process (their characteristics coincide with each other). On the other hand, the judging section 46 judges that the piercing process fails when the light level temporal transition differs from the reference transition pattern for the piercing process (their characteristics differ from each other). Then, when the judging section 46 judges that the piercing process completes properly, the signal output section 48 stops the piercing process even when the piercing program is still executed, and then immediately outputs a trigger signal for transitioning to the cutting process (the approaching process) to the NC device 34. On the other hand, when the judging section 46 judges that the piercing process fails, the signal output section 48 outputs an alarm signal to the NC device 34. Note that the signal output section 48 may output an alarm signal to the NC device 34 when the state continues for a predetermined time (e.g. few hundreds seconds) or when the same judgement is made again after a predetermined time elapses.

In a case where the signal output section 48 outputs the trigger signal for transitioning to the cutting process (the approaching process), the cutting process is immediately started. The judging section 46 judges the cutting success/failure by comparing the light level temporal transition of the specific wavelength band according to the processing condition output from the stored data processing section 44 and the reference transition pattern for the cutting process stored in the judgement information memory 42. The judging section 46 judges that the cutting process is done properly when the light level temporal transition coincides with the reference transition pattern for the cutting process (their characteristics coincide with each other). On the other hand, the judging section 46 judges that the cutting process fails when the light level temporal transition differs from the reference transition pattern for the cutting process (their characteristics differ from each other). Then, when the judging section 46 judges that cutting process fails, the signal output section 48 outputs an alarm signal to the NC device 34. Note that the signal output section 48 may output an alarm signal to the NC device 34 when the state continues for a predetermined time (e.g. few hundreds seconds) or when the same judgement is made again after a predetermined time elapses.

Note that the judging section 46 may contain material and a thickness of a workpiece W and a processing type (piercing, cutting and so on) in a judgement criterion for judging the laser processing state. Selection and setting of the judgement criterion can be changed arbitrarily.

Subsequently, advantages of the embodiment will be explained.

During the laser processing of the workpiece W, the returned light BR' passing through the bend mirror 32 in the returned light BR traveling from the side of the processed point SP toward the bend mirror 32 is detected as a detection target, and the spectrometer 38 detects the light intensity of the plural specific wavelength bands according to the processing condition in temporal sequence. Then, the judging section 46 judges the laser processing state by comparing the reference transition pattern for judging the laser processing state and the results of the light level temporal transitions of the specific wavelength bands according to the processing condition that is the detection result from the spectrometer 38. The signal output section 48 outputs the trigger signal for transitioning to the cutting process (the approaching process) or the alarm signal to the NC device 34 based on the judgement result of the judging section 46. According to this, the laser processing machine 10 can monitor the laser processing state based on the monitoring program.

In addition, in a case of monitoring both wavelengths of an 800nm wavelength band and a 470nm wavelength band, the judging section 46 calculates the ratio of the light level of the 470nm wavelength band with respect to the light level of the 800nm wavelength band (hereinafter, referred to as the ratio of the light levels) to judge whether or not gouging occurs due to a processing failure. Note that gouging in a laser processing is a state where a laser light LB doesn't penetrate a workpiece W and thereby cutting is not accomplished and melted metal is ejected from a surface of the workpiece W.

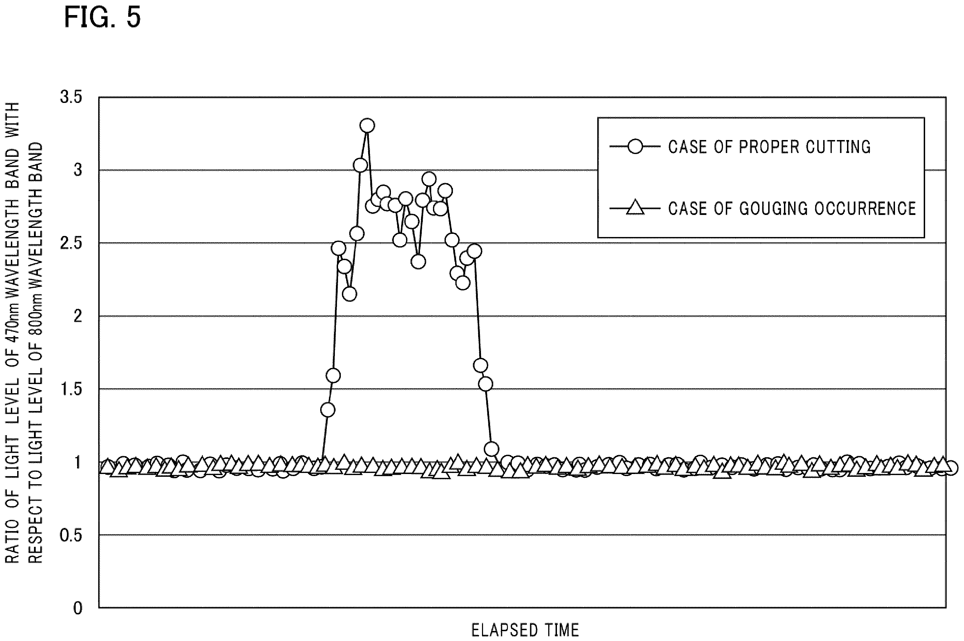

Fig. 5 shows relationship between the ratio of the light levels and the elapsed time when cutting a workpiece W made of iron-based metal. The ratio of the light levels is larger when cutting is done properly than when cutting is not done properly. That is, with respect to the retuned light BR to the laser processing head 20 when cutting is done properly, the light level of the 470nm wavelength band is higher than the light level of the 800nm wavelength band. On the other hand, the light levels of the both wavelength bands become equivalent when gouging occurs during cutting, because the light of the 800nm wavelength band increases (or, the light of the 470nm wavelength band decreases). Therefore, in a case of cutting iron-based metal, the judging section 46 can judge that a cutting failure occurs when the ratio of the light levels becomes "almost 1", when the ratio of the light levels keeps an extremely lower constant value than that in a proper cutting, or when the light level of the 800nm wavelength band and the light level of the 470nm wavelength band in the light returning to the laser processing head 20 become almost equivalent to each other.

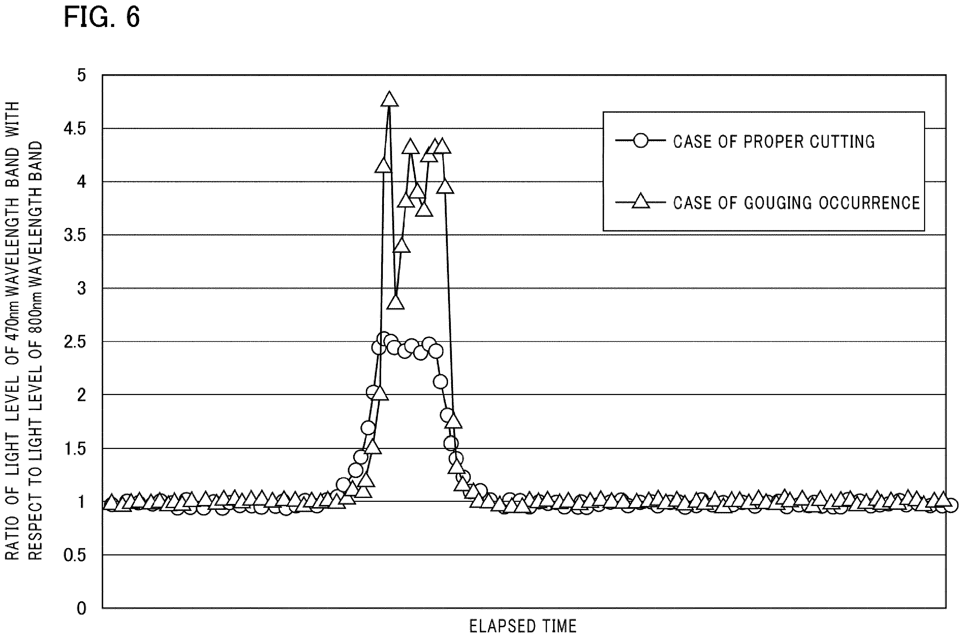

Fig. 6 shows relationship between the ratio of the light levels and elapsed time when cutting a workpiece W made of aluminum alloy. The ratio of the light levels becomes large both when cutting is done properly and when cutting is not done properly. However, the light levels when cutting is not done properly is higher than when cutting is done properly. That is, when cutting is done properly, the light level of the 470nm wavelength band is higher than the light level of the 800nm wavelength band with respect to the returned light BR traveling toward the laser processing head 20. But, the ratio of the light levels becomes much larger when cutting is not done properly (when gouging occurs) than when cutting is done properly, because the light of the 470nm wavelength band increases (or, the light of the 800nm wavelength band decreases). Therefore, when cutting aluminum-based metal, the judging section 46 can judge that a cutting failure occurs when the ratio of the light levels is larger than "almost 1" and becomes much larger, or when the light level of the 470nm wavelength band becomes higher than the light level of the 800nm wavelength band.

According to the present embodiment, the laser processing machine 10 limitedly detects the light of the specific wavelength band according to the processing condition in the returned light BR' passing through the bend mirror 32 as the detection target in order to monitor the laser processing state based on the monitoring program. Therefore, the laser processing machine 10 can monitor a proper processing process and can monitor a proper cutting state distinctively from a failed processing state under various processing conditions while cutting is done properly by monitoring the light level of the returned light BR' as the detection target.

Therefore, according to the present embodiment, a stable laser processing can be done while distinguishing a proper processing state and a failed processing state from each other by monitoring an actual laser processing state based on the transition of the light level under various processing conditions. In addition, in a case where material of a workpiece W is iron-based metal and assist gas is changed, it is possible to monitor whether or not an assist gas failure occurs, and thereby a further stable laser processing can be done.

Note that the NC device 34 may possess a function as the judgement information memory 42, a function as the stored data processing section 44, a function as the judging section 46 and a function as the signal output section 48. In addition, the spectrometer 38 may detect a light level of a wavelength band used in laser processing other than the light level of the specific wavelength band according to the processing condition.

### (Another Embodiment)

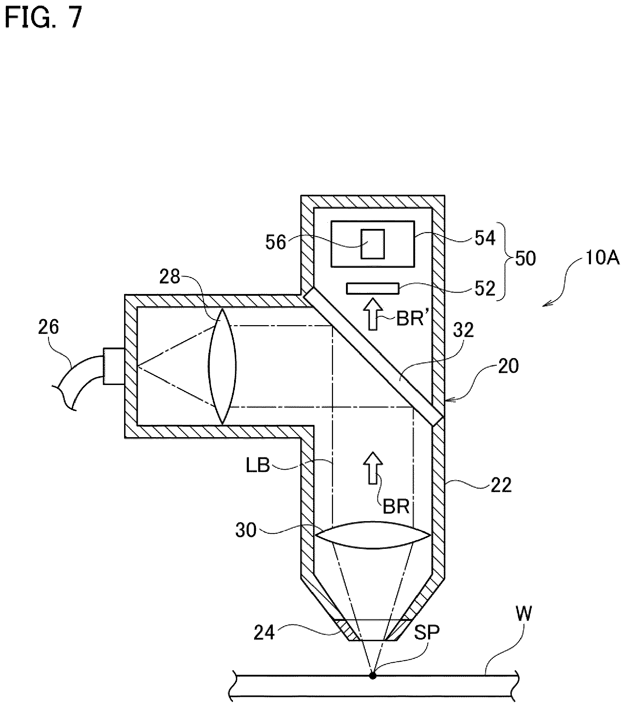

As shown in Fig. 1 and Fig. 7, a laser processing machine 10A according to another embodiment includes a monitoring unit 50 instead of the monitoring unit 36 (see Fig. 2). Other configurational elements are almost the same as the configurational elements of the laser processing machine 10 in the above-explained embodiment. The monitoring unit 50 in the present embodiment will be explained. Note that identical or equivalent elements to those of the above-explained laser processing machine 10 are labelled with identical signs.

An optical filter 52 is provided on a pass-through side of the bend mirror 32 within the processing head body 22. The optical filter 52 is configured so that only lights of plural specific wavelength bands according to the processing condition in the returned light BR' passing through the bend mirror 32 are passed through it.

A monitoring controller 54 is provided on a pass-through side of the optical filter 52 within the processing head body 22 as a monitoring section that monitors a laser processing state. The monitoring controller 54 has a photodiode circuit 56 that detects intensity of a light passing through the optical filter 52. The photodiode circuit 56 receives the light passing through the optical filter 52 and outputs a voltage corresponding to its light intensity. That is, the optical filter 52 and the photodiode circuit 56 correspond to a detector that detects a light level of the specific wavelength band(s) according to the processing condition in the returned light BR traveling from the processed point toward the bend mirror 32 while the laser light LB is irradiated. Note that the light intensity may be A/D converted in the photodiode circuit 56, and then output as a light level. In such a case, the photodiode circuit 56 may further store the data in temporal sequence in accordance with a sampling cycle and then output temporal transition of the stored light level.

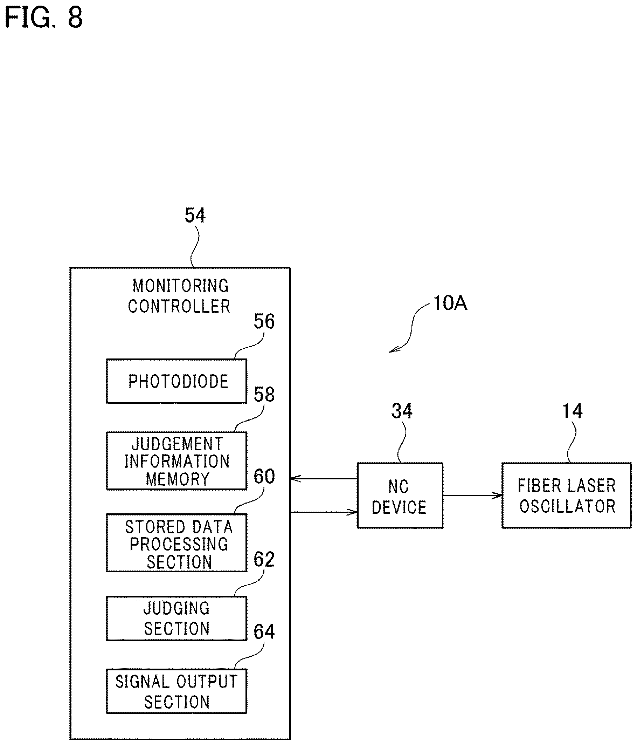

As shown in Fig. 4 and Fig. 8, the monitoring controller 54 has a memory for storing the processing program(s) and so on and a CPU (Central Processing Unit) for interpreting and executing the processing program(s). In addition, the monitoring controller 54 possesses a function as a judgement information memory 58, a function as a stored data processing section 60, a function as a judging section 62 and a function as a signal output section 64. The judgement information memory 58, the stored data processing section 60, the judging section 62 and the signal output section 64 correspond to the judgement information memory 42, the stored data processing section 44, the judging section 46 and the signal output section 48 that are explained above, respectively.

The judgement information memory 58 stores a threshold value (light level) for judging a laser processing state for each processing condition as judgement information. In addition, the judgement information memory 58 stores a reference transition pattern for each processing condition as the judgement information. The reference transition pattern indicates an assumed temporal transition of a light level of a specific wavelength band in a proper laser processing state.

The stored data processing section 60 stores a light level temporal transition of the specific wavelength band according to the processing condition as a detection result from the photodiode circuit 56 . Note that, in case where an output of the photodiode circuit 56 is an analog voltage, light intensity may be A/D converted in the stored data processing section 60 and then stored . In such a case, the stored data processing section 60 may further store the data in temporal sequence in accordance with a sampling cycle.

The judging section 62 judges the laser processing state by comparing the reference transition pattern stored in the judgement information memory 58 and the temporal transition of the light level of the specific wavelength band according to the processing condition output from the stored data processing section 60. Then, the signal output section 64 outputs a trigger signal for transitioning to the cutting process (the approaching process) or an alarm signal to the NC device 34 based on the judgement result of the judging section 62. According to this, the laser processing machine 10 can monitor the laser processing state based on the monitoring program.

According to the present embodiment, advantages equivalent to those brought by the above-explained embodiment can be brought.

In the case of using the spectrometer 38 and the case of using the photodiode circuit 56, the light level(s) of the specific wavelength band(s) is detected. The bend mirror 32 filters and cuts the laser light LB and the guide light. Therefore, the bend mirror 32 may not be used, if the laser light LB and the guide light are filtered and cut in advance of the spectrometer 38 or the photodiode circuit 56. In addition, the NC device 34 may possess a function as the judgement information memory 58, a function as the stored data processing section 60, a function as the judging section 62 and a function as the signal output section 64.

### (Practical Examples)

Hereinafter, practical examples will be explained.

### (Practical Example 1)

A processing test of a first processing success/failure judgement is done by investing the light level (the A/D count value) of the returned light passing through the bend mirror by use of a monitoring unit whose configuration is identical to that of the monitoring unit 36 (see Fig. 2) in both cases under a first processing condition, one is a case where the piercing process and the cutting process are done properly and another is a case where the cutting process is not done properly (gouging and burning (burnout) occur mixedly). In addition, a processing test of the first processing success/failure judgement is done by investing the light level (the A/D count value) of the returned light passing through the bend mirror in three cases under a second processing condition, one is a case where the piercing process is done properly, another is a case where the cutting process is done properly and yet another is a case where the cutting process is not done properly (gouging occurs). Note that, in the processing tests of the first processing success/failure judgement, twenty different types of wavelengths are extracted at wavelength intervals from 700nm-900nm wavelength bands and then the light level of them are detected in temporal sequence by the spectrometer of the monitoring unit.

Here, under the first processing condition, material of a workpiece is mild steel, a thickness of the workpiece is 1mm and assist gas is oxygen. Under the second processing condition, material of a workpiece is mild steel, a thickness of the workpiece is 19mm and assist gas is oxygen. In addition, a state of a cutting failure is replicated in a pseudo manner by defocusing a focal position of the laser light upward from the surface of a workpiece. Note that the burning is self-burning of a workpiece made of mild steel whose thickness is moderate or large. The self-burning is a state where a cutting slot expands to an ejected range of assist gas due to excessive reactions of iron that is a main component of mild steel and oxygen of the assist gas and thereby roughness of a cut surface degrades significantly.

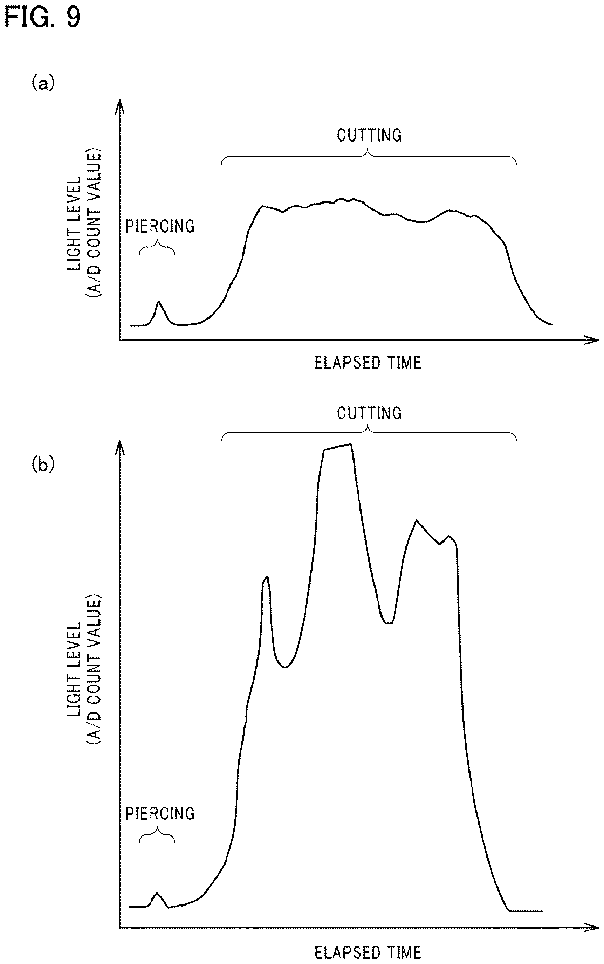

Results of the processing tests of the first cutting success/failure judgement under the first processing condition are shown in Fig. 9(a) and Fig. 9(b). Fig. 9(a) and Fig. 9(b) show only light level transition of an 800nm wavelength band.

When the cutting process is done properly as shown in Fig. 9(a), it is confirmed that a light of the 800nm wavelength band keeps stable light level transition in comparison with a light of other wavelength bands. On the other hand, when the cutting process is not done properly (gouging and burning occur mixedly) as shown in Fig. 9(b), it is confirmed that a light of the 800nm wavelength band presents a state where its light level is excessively higher than that in its proper state and further presents unstable transition.

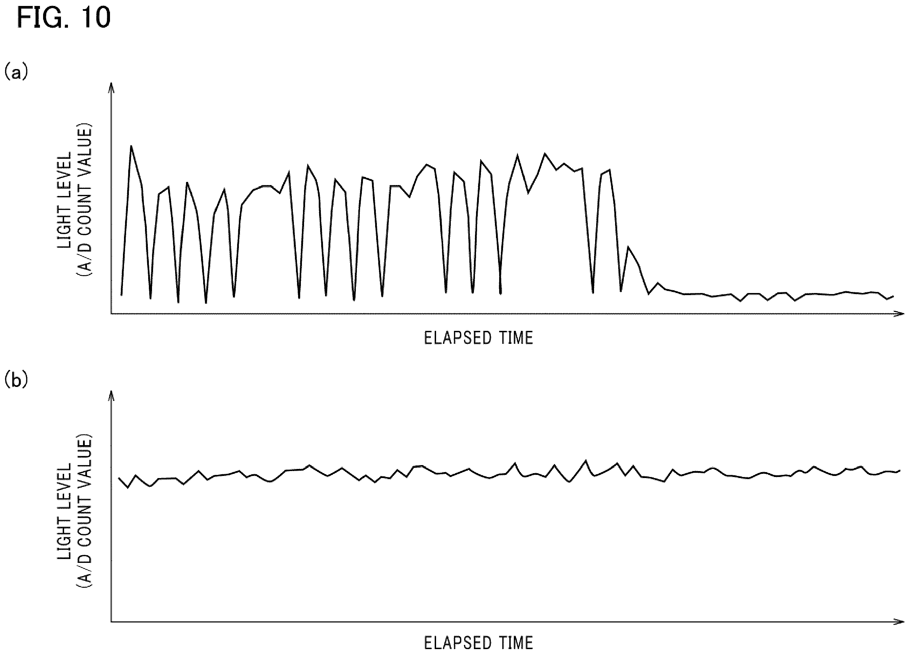

Results of the processing tests of the first cutting success/failure judgement under the second processing condition are shown in Fig. 10(a), Fig. 10(b), Fig. 11 and Fig. 12. Fig. 10(a), Fig. 10(b), Fig. 11 and Fig. 12 show only light level transitions of an 800nm wavelength band.

When the piercing process is done properly as shown in Fig. 10(a), it is confirmed that a light level of the 800nm wavelength band shifts so as to present its high states and its low states repeatedly in temporal sequence. It is assumed that this is caused as follows: fusions of metal due to energies of the laser light and blasting due to a gas pressure of the assist gas occur concurrently and continuously within a processed hole during a penetration of a processed depression (processed hole) to form a pierced hole. It is assumed that a laser-irradiated surface within the processed hole undulates irregularly and thereby irregularly-scattered rays occur at this process. And, the cutting process is done properly as shown in Fig. 10(b), it is confirmed that a light level of the 800nm wavelength band fluctuates minutely in temporal sequence (presents stable transition as a whole). It is assumed that this is caused by repeats of irregular fusions and removals of melted metal due to fusions of metal made by energies of the laser light and flowing-away of melted metal made by a gas pressure of the assist gas at the cutting front.

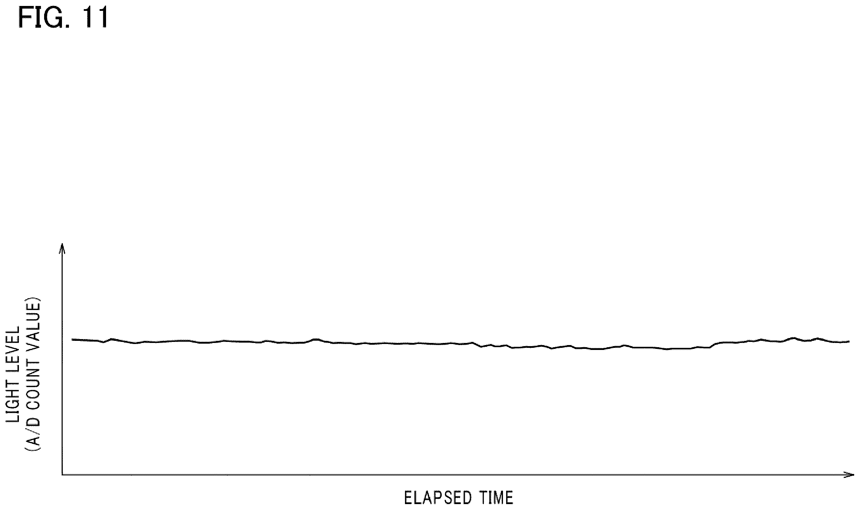

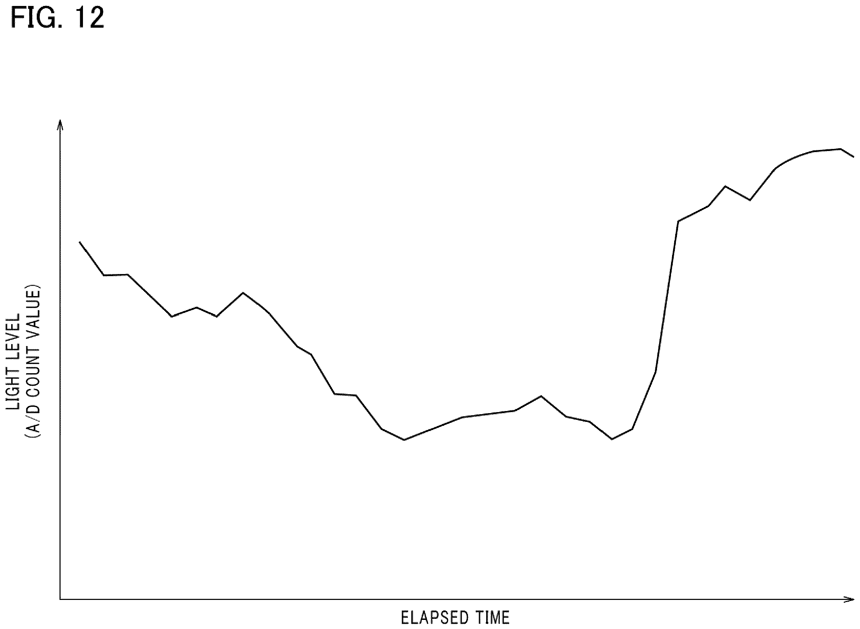

On the other hand, when the cutting process is not done properly (gouging occurs) as shown in Fig. 11, it is confirmed that temporally-sequential fluctuations of a light level of the 800nm wavelength band is smaller than that in the proper cutting process. It is assumed that this is caused by as follows: the cutting front is not formed but a bulge surface is formed on a workpiece that scatters a light of the 800nm wavelength band and thereby the returned light is subjected to being stable. In this manner, occurrence of gouging can be monitored only from the light level of the 800nm wavelength band based on the difference between the waveform shown in Fig. 10(b) and the waveform shown in Fig. 11. Note that, as already explained with reference to Fig. 5 (Fig. 6), the occurrence of gouging can be monitored also by utilizing the ratio of the light level of the 470nm wavelength band with respect to the light level of the 800nm wavelength band. In addition, when the cutting process is not done properly (burning occurs) as shown in Fig. 12, it is confirmed that a light level of the 800nm wavelength band shifts drastically in temporal sequence. It is assumed that this is caused by formation of an irregular cut surface due to excessive fusions of the cutting front and its proximity.

Note that the same results can be got in a case where material of a workpiece is other iron-based metals such as stainless steel and in a case where thickness of a workpiece is changed.

That is, in a case where a workpiece is made of iron-based metal, it is possible to monitor the laser processing state under various processing conditions based on the monitoring program through the judgement of the laser processing state by limitedly detecting a light of the 800nm wavelength band passing through the bend mirror. Further, a new knowledge can be got: it is possible to detect a light level stably by limiting the detection wavelength without making the light level excessively small or large.

### (Practical Example 2)

A processing test of a second processing success/failure judgement is done by investing the light level of the returned light passing through the bend mirror under the first processing condition by use of a monitoring unit whose configuration is identical to that of the monitoring unit 36 (see Fig. 2) in a case where the cutting process is done properly. In addition, a processing test of the second processing success/failure judgement is done by investing the light level of the returned light passing through the bend mirror in both cases under the second processing condition, one is a case where the assist gas failure occurs and another is a case where the cutting process is done properly. Note that, in the processing tests of the second processing success/failure judgement, ten different types of wavelengths are extracted at wavelength intervals from 400nm-550nm wavelength bands and then the light level of them are detected in temporal sequence by the spectrometer of the monitoring unit.

Here, a state of the assist gas failure is assumed as a state where nitrogen remains within the laser processing head after a process for exchanging the assist gas from nitrogen to oxygen has been done. Pseudo tests of the piercing process are done in the above state.

According to results of the processing test of the second processing success/failure judgement under the first processing condition, it is confirmed that a light of the 470nm wavelength band becomes higher than that in its proper state (without inclusion of nitrogen). In other words, it is confirmed that it is possible to detect, when carrying out a piercing process of a workpiece made of mild steel by using oxygen as assist gas, an improper use of the assist gas with inclusion of nitrogen.

That is, a new knowledge can be got: it is possible to detect, in a case where a workpiece is made of mild steel and nitrogen is erroneously included in the assist gas (oxygen), an insufficient exchange of the assist gas can be detected through the judgement of the laser processing state by limitedly detecting the light of the 470nm wavelength band passing through the bend mirror.

According to the above embodiments, the returned light, which is the detection target for monitoring the processing state of the laser processing, is limited to the specific wavelength band(s) according to the processing condition. Therefore, the light level of the returned light as the detection target doesn't become excessively large (small) under various processing conditions while the laser processing is done properly. Thus, it is possible to monitor a proper cutting state distinctively from a failed processing state by detecting the stable transitions of the light levels in temporal sequence (the upper/lower limit values of the light intensity and the transition cycle of high/low of the light intensity that represent a proper processing state).

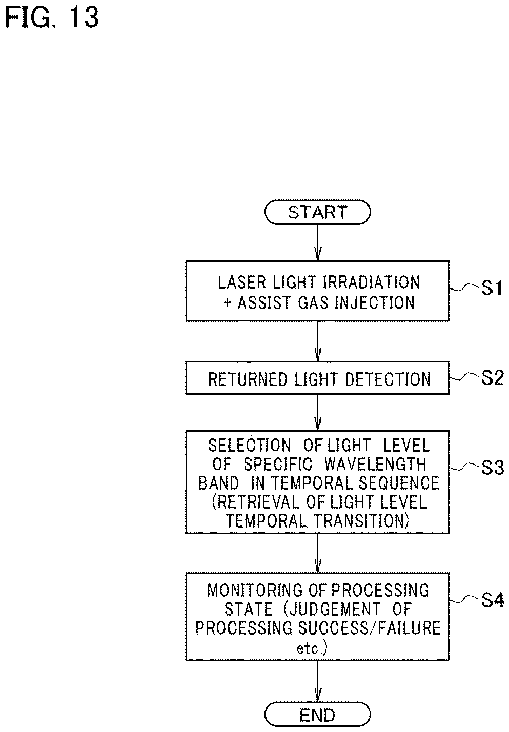

The laser processing method according to the above embodiments will be briefly explained with reference to a flowchart shown in Fig. 13. In the laser processing method according to the present embodiment, the workpiece W is laser-processed while monitoring the laser processing state as explained above. First, the laser light LB is irradiated from the laser processing head 20 optically connected with the laser oscillator 14 that outputs the laser light having the 1µm wavelength band toward the workpiece W while injecting the assist gas (step S1). That is, the workpiece W is laser-processed. The returned light BR' (BR) traveling from a side of the processed point, including the processing point and the vicinity of the processing point, toward the laser processing head 20 is detected by the detector (the spectrometer 38 or the optical filter 52 + the photodiode circuit 56) while the laser light LB is irradiated during the laser processing (step S2). The light level of the specific wavelength band(s) according to the processing condition is selected in the detected returned light BR' (step S3). That is, the light level temporal transition of the specific wavelength band(s) is retrieved. The laser processing state is monitored based on the selected light level (step S4). The step S3 and the step S4 are done by the monitoring section (the monitoring controller 40, 54), and can be executed not as two processes but as a single process.

For example, the specific wavelength band according to the processing condition is an 800nm wavelength band, and it becomes possible to monitor a processing failure of iron-based metal (a piercing failure and a cutting failure such as gouging and burning) (Practical Example 1). In addition, the specific wavelength band according to the processing condition is a 470nm wavelength band, and it becomes possible to monitor an assist gas failure while processing iron-based metal (Practical Example 2). Or, a 470nm wavelength band and an 800nm wavelength band can be selected as the specific wavelength bands according to the processing condition. In this case, it becomes possible to monitor a processing failure of iron-based metal or aluminum-based metal (Fig. 5 and Fig. 6) .

## Claims

1. A laser processing machine (10, 10A) comprising:
a laser oscillator (14) that outputs a laser light (LB) having a 1µm wavelength band;
a laser processing head (20) that is optically connected with the laser oscillator (14) and irradiates the laser light (LB) toward a workpiece (W) while injecting assist gas;
a detector (38, 52+56) that is provided within the laser processing head (20) and detects a returned light (BR, BR') travelling from a side of a processed point (SP), including the processed point (SP) and a vicinity of the processed point (SP), toward the laser processing head (20) while the laser light (LB) is irradiated; and
a monitoring section (40, 54) that monitors a laser processing state by selectively detecting a light level of a specific wavelength band according to a processing condition in temporal sequence from the returned light (BR, BR') detected by the detector (38, 52+56),
**characterized in that** the monitoring section (40, 54) has a judging section (46, 62) that judges the laser processing state by comparing a reference transition pattern that indicates light level temporal transition of the specific wavelength band assumed in a case where the laser processing condition is proper and light level temporal transition of the specific wavelength band according to the processing condition as a detection result from the detector (38, 52+56).

2. The laser processing machine (10, 10A) according to claim 1, further comprising the detector (38, 52+56) is a spectrometer (38).

3. The laser processing machine (10, 10A) according to claim 2, wherein the monitor section (40, 54) extracts lights of the plural specific wavelength bands according to the processing condition and monitors light levels thereof.

4. The laser processing machine (10, 10A) according to claim 1, wherein the detector (52+56) has an optical filter (52) that passes only a light of the specific wavelength band according to the processing condition therethrough and a photodiode circuit (56) that detects light intensity of the light passing through the optical filter (52).

5. The laser processing machine (10, 10A) according to any one of claims 1, 2 and 4, wherein the monitoring section (40, 54) monitors a light level of an 800nm wavelength band as the specific wavelength band according to the processing condition.

6. The laser processing machine (10, 10A) according to any one of claims 1, 2 and 4, wherein the monitoring section (40, 54) monitors a light level of a 470nm wavelength band as the specific wavelength band according to the processing condition.

7. The laser processing machine (10, 10A) according to claim 3, wherein the monitoring section (40) monitors light levels of an 800nm wavelength band and a 470nm wavelength band as the specific wavelength bands according to the processing condition.

8. The laser processing machine (10, 10A) according to any one of claims 1, 2 and 4, wherein the monitoring section (40, 54) has a judging section that judges the laser processing state by comparing a threshold value for judging the laser processing state and a detection result from the detector.

9. A laser processing method for carrying out laser processing on a workpiece (W), the method comprising:
irradiating a laser light (LB) from a laser processing head (20) that is optically connected with a laser oscillator (14) that outputs the laser light (LB) having a 1µm wavelength band toward the workpiece (W) while injecting assist gas;
detecting a returned light (BR, BR') travelling from a side of a processed point (SP), including the processed point (SP) and a vicinity of the processed point (SP), toward the laser processing head (20) while the laser light (LB) is irradiated; and
monitoring a laser processing state by selectively detecting a light level of a specific wavelength band according to a processing condition in temporal sequence from the detected returned light (BR, BR') and by comparing a reference transition pattern that indicates light level temporal transition of the specific wavelength band assumed in a case where the laser processing condition is proper and light level temporal transition of the specific wavelength band according to the processing condition as a detection result from the detecting.

10. The laser processing method according to claim 9, wherein a light level of an 800nm wavelength band is monitored as the specific wavelength band according to the processing condition.

11. The laser processing method according to claim 9, wherein a light level of a 470nm wavelength band is monitored as the specific wavelength band according to the processing condition.

12. The laser processing method according to claim 9, wherein light levels of an 800nm wavelength band and a 470nm wavelength band are monitored as the specific wavelength band according to the processing condition.

## Patentansprüche

1. Laserbearbeitungsmaschine (10, 10A), umfassend:
einen Laseroszillator (14), der ein Laserlicht (LB) mit einem 1µm-Wellenlängenband abgibt;
einen Laserbearbeitungskopf (20), der mit dem Laseroszillator (14) optisch verbunden ist und das Laserlicht (LB) auf ein Werkstück (W) strahlt, während ein Hilfsgas injiziert wird;
einen Detektor (38, 52+56), der innerhalb des Laserbearbeitungskopfes (20) vorgesehen ist und ein zurückgeworfenes Licht (BR, BR') erfasst, das sich von einer Seite eines bearbeiteten Punktes (SP), einschließlich des bearbeiteten Punktes (SP) und einer Umgebung des bearbeiteten Punktes (SP), in Richtung des Laserbearbeitungskopfes (20) ausbreitet, während das Laserlicht (LB) eingestrahlt wird; und
einen Überwachungsabschnitt (40, 54), der einen Laserbearbeitungszustand durch selektives Erfassen eines Lichtpegels eines spezifischen Wellenlängenbandes gemäß einer Bearbeitungsbedingung in zeitlicher Abfolge aus dem zurückgeworfenen Licht (BR, BR') überwacht, das durch den Detektor (38, 52+56) erfasst wird,
**gekennzeichnet dadurch, dass** der Überwachungsabschnitt (40, 54) einen Beurteilungsabschnitt (46, 62) aufweist, der den Laserbearbeitungszustand beurteilt, indem er ein Referenzübergangsmuster, das den zeitlichen Übergang des Lichtpegels des spezifischen Wellenlängenbandes anzeigt, der in einem Fall angenommen wird, in dem die Laserbearbeitungsbedingung ordnungsgemäß ist, und den zeitlichen Übergang des Lichtpegels des spezifischen Wellenlängenbandes gemäß der Verarbeitungsbedingung als Erfassungsergebnis von dem Detektor (38, 52+56) vergleicht.

2. Die Laserbearbeitungsmaschine (10, 10A) nach Anspruch 1, ferner umfassend dass der Detektor (38, 52+56) ein Spektrometer (38) ist.

3. Laserbearbeitungsmaschine (10, 10A) nach Anspruch 2, wobei der Überwachungsabschnitt (40, 54) Licht mehrerer spezifischer Wellenlängenbänder entsprechend der Bearbeitungsbedingung extrahiert und deren Lichtpegel überwacht.

4. Laserbearbeitungsmaschine (10, 10A) nach Anspruch 1, wobei der Detektor (52+56) einen optischen Filter (52), der nur Licht des spezifischen Wellenlängenbandes entsprechend der Bearbeitungsbedingung durchlässt, und eine Fotodiodenschaltung (56) aufweist, die die Lichtintensität des durch den optischen Filter (52) hindurchtretenden Lichts erfasst.

5. Laserbearbeitungsmaschine (10, 10A) nach einem der Ansprüche 1, 2 und 4, wobei der Überwachungsabschnitt (40, 54) einen Lichtpegel eines 800nm-Wellenlängenbandes als das spezifische Wellenlängenband gemäß der Bearbeitungsbedingung überwacht.

6. Laserbearbeitungsmaschine (10, 10A) nach einem der Ansprüche 1, 2 und 4, wobei der Überwachungsabschnitt (40, 54) einen Lichtpegel eines 470nm-Wellenlängenbandes als das spezifische Wellenlängenband entsprechend der Bearbeitungsbedingung überwacht.

7. Laserbearbeitungsmaschine (10, 10A) nach Anspruch 3, wobei der Überwachungsabschnitt (40) Lichtpegel eines 800nm-Wellenlängenbandes und eines 470nm-Wellenlängenbandes als die spezifischen Wellenlängenbänder entsprechend der Bearbeitungsbedingung überwacht.

8. Laserbearbeitungsmaschine (10, 10A) nach einem der Ansprüche 1, 2 und 4, wobei der Überwachungsabschnitt (40, 54) einen Beurteilungsabschnitt aufweist, der den Laserbearbeitungszustand beurteilt, indem er einen Schwellenwert zur Beurteilung des Laserbearbeitungszustands und ein Erfassungsergebnis des Detektors vergleicht.

9. Laserbearbeitungsverfahren zum Ausführen einer Laserbearbeitung an einem Werkstück (W), wobei das Verfahren umfasst:
Einstrahlen eines Laserlichts (LB) von einem Laserbearbeitungskopf (20), der optisch mit einem Laseroszillator (14) verbunden ist, der das Laserlicht (LB) mit einem 1µm-Wellenlängenband in Richtung des Werkstücks (W) abgibt, während Hilfsgas injiziert wird;
Erfassen eines zurückgeworfenen Lichts (BR, BR'), das sich von einer Seite eines bearbeiteten Punkts (SP), einschließlich des bearbeiteten Punkts (SP) und einer Umgebung des bearbeiteten Punkts (SP), in Richtung des Laserbearbeitungskopfs (20) ausbreitet, während das Laserlicht (LB) eingestrahlt wird; und
Überwachen eines Laserbearbeitungszustandes durch selektives Erfassen eines Lichtpegels eines spezifischen Wellenlängenbandes gemäß einer Bearbeitungsbedingung in zeitlicher Abfolge aus dem erfassten zurückgeworfenen Licht (BR, BR') und durch Vergleichen eines Referenzübergangsmusters, das den zeitlichen Übergang des Lichtpegels des spezifischen Wellenlängenbandes anzeigt, der in einem Fall angenommen wird, in dem die Laserbearbeitungsbedingung ordnungsgemäß ist, und den zeitlichen Übergang des Lichtpegels des spezifischen Wellenlängenbandes gemäß der Bearbeitungsbedingung als ein Erfassungsergebnis des Erfassens.

10. Laserbearbeitungsverfahren nach Anspruch 9, wobei ein Lichtpegel eines 800nm-Wellenlängenbandes als das spezifische Wellenlängenband gemäß der Bearbeitungsbedingung überwacht wird.

11. Laserbearbeitungsverfahren nach Anspruch 9, wobei ein Lichtpegel eines 470nm-Wellenlängenbandes als das spezifische Wellenlängenband gemäß der Bearbeitungsbedingung überwacht wird.

12. Laserbearbeitungsverfahren nach Anspruch 9, wobei Lichtpegel eines 800nm-Wellenlängenbandes und eines 470nm-Wellenlängenbandes als das spezifische Wellenlängenband gemäß der Bearbeitungsbedingung überwacht werden.

## Revendications

1. Machine de traitement par laser (10, 10A) comprenant :
un oscillateur laser (14) qui produit une lumière laser (LB) présentant une bande de longueur d'onde de 1 µm ;
une tête de traitement par laser (20) qui est optiquement connectée à l'oscillateur laser (14) et irradie la lumière laser (LB) vers une pièce d'ouvrage (W) tout en injectant un gaz d'assistance ;
un détecteur (38, 52+56) qui est disposé au sein de la tête de traitement par laser (20) et détecte une lumière renvoyée (BR, BR') cheminant d'un côté d'un point traité (SP), incluant le point traité (SP) et une proximité du point traité (SP), vers la tête de traitement par laser (20) tandis que la lumière laser (LB) est irradiée ; et
une section de surveillance (40, 54) qui surveille un état de traitement par laser en détectant sélectivement un niveau de lumière d'une bande de longueur d'onde spécifique selon une condition de traitement en séquence temporelle à partir de la lumière renvoyée (BR, BR') détectée par le détecteur (38, 52+56),
**caractérisée en ce que**
la section de surveillance (40, 54) présente une section de jugement (46, 62) qui juge l'état de traitement par laser en comparant un schéma de transition de référence qui indique une transition temporelle de niveau de lumière de la bande de longueur d'onde spécifique supposée dans un cas où la condition de traitement par laser est adéquat et une transition temporelle de niveau de lumière d'une longueur d'onde spécifique selon la condition de traitement en tant que résultat de détection issu du détecteur (38, 52+56).

2. La machine de traitement par laser (10, 10A) selon la revendication 1, comprenant en outre le détecteur (38, 52+56) est un spectromètre (38).

3. La machine de traitement par laser (10, 10A) selon la revendication 2, dans laquelle la section de surveillance (40, 54) extrait des lumières des plusieurs bandes de longueur d'onde spécifiques selon la condition de traitement et surveille des niveaux de lumière de celles-ci.

4. La machine de traitement par laser (10, 10A) selon la revendication 1, dans laquelle le détecteur (52+56) présente un filtre optique (52) qui laisse traverser uniquement une lumière de la bande de longueur d'onde spécifique selon la condition de traitement et un circuit de photodiode (56) qui détecte une intensité de lumière de la lumière traversant le filtre optique (52).

5. La machine de traitement par laser (10, 10A) selon l'une quelconque des revendications 1, 2 et 4, dans laquelle la section de surveillance (40, 54) surveille un niveau de lumière monitors d'une bande de longueur d'onde de 800 nm en tant que la bande de longueur d'onde spécifique selon la condition de traitement.

6. La machine de traitement par laser (10, 10A) selon l'une quelconque des revendications 1, 2 et 4, dans laquelle la section de surveillance (40, 54) surveille un niveau de lumière d'une bande de longueur d'onde de 470 nm en tant que la bande de longueur d'onde spécifique selon la condition de traitement.

7. La machine de traitement par laser (10, 10A) selon la revendication 3, dans laquelle la section de surveillance (40) surveille des niveaux de lumière d'une bande de longueur d'onde de 800 nm et d'une bande de longueur d'onde de 470 nm en tant que les bandes de longueur d'onde spécifiques selon la condition de traitement.

8. La machine de traitement par laser (10, 10A) selon l'une quelconque des revendications 1, 2 et 4, dans laquelle la section de surveillance (40, 54) présente une section de jugement qui juge l'état de traitement par laser en comparant une valeur de seuil pour juger l'état de traitement par laser et un résultat de détection issu du détecteur.

9. Procédé de traitement par laser pour exécuter un traitement par laser sur une pièce d'ouvrage (W), le procédé comprenant :
irradiation d'une lumière laser (LB) depuis une tête de traitement par laser (20) qui est optiquement connectée à un oscillateur laser (14) qui génère la lumière laser (LB) présentant une bande de longueur d'onde de 1 µm vers la pièce d'ouvrage (W) tout en injectant un gaz d'assistance ;
détection d'une lumière renvoyée (BR, BR') cheminant d'un côté d'un point traité (SP), incluant le point traité (SP) et une proximité du point traité (SP), vers la tête de traitement par laser (20) tandis que la lumière laser (LB) est irradiée ; et
surveillance d'un état de traitement par laser en détectant sélectivement un niveau de lumière d'une bande de longueur d'onde spécifique selon une condition de traitement en séquence temporelle issu de la lumière renvoyée détectée (BR, BR') et en comparant un schéma de transition de référence qui indique une transition temporelle de niveau de lumière de la bande de longueur d'onde spécifique présumée dans un cas où la condition de traitement par laser est adéquat et une transition temporelle de niveau de lumière de la bande de longueur d'onde spécifique selon la condition de traitement en tant que résultat de détection issu de la détection.

10. Le procédé de traitement par laser selon la revendication 9, dans lequel un niveau de lumière d'une bande de longueur d'onde de 800 nm est surveillé en tant que la bande de longueur d'onde spécifique selon la condition de traitement.

11. Le procédé de traitement par laser selon la revendication 9, dans lequel un niveau de lumière d'une bande de longueur d'onde de 470 est surveillé en tant que la bande de longueur d'onde spécifique selon la condition de traitement.

12. Le procédé de traitement par laser selon la revendication 9, dans lequel des niveaux de lumière d'une bande de longueur d'onde de 800 nm et d'une bande de longueur d'onde de 470 nm sont surveillés en tant que la bande de longueur d'onde spécifique selon la condition de traitement.
